# FASCICULE DE BREVET EUROPEEN

(11) **EP 3 635 242 B1**
(45) Date de publication et mention de la délivrance du brevet: **24.03.2021**
(21) Numéro de dépôt: 18749423.2
(22) Date de dépôt: 06.06.2018
(51) Int. Cl.: F03C 1/04, F03C 1/06, F04B 1/04, F04B 1/12, F04B 53/08, F04B 53/14, F04B 53/18, F16J 1/00

(54) **PISTON HYDRAULIQUE A VALVE PORTE-JOINT DE REFROIDISSEMENT ET DE LUBRIFICATION**
HYDRAULISCHER KOLBEN MIT VENTIL ZUM HALTEN EINER KÜHL- UND SCHMIERDICHTUNG
HYDRAULIC PISTON WITH VALVE FOR HOLDING A COOLING AND LUBRICATION SEAL

(30) Priorité: 06.06.2017 FR 1755029
(43) Date de publication de la demande: 15.04.2020
(73) Titulaire: Rabhi, Vianney, 69006 Lyon (FR)
(72) Inventeur: Rabhi, Vianney, 69006 Lyon (FR)
(74) Mandataire: Godard, Xavier
(86) Numéro de dépôt international: PCT/FR2018/051300
(87) Numéro de publication internationale: WO 2018/224769

(56) Documents cités:
- EP-A1- 3 025 060
- DE-A1-102011 106 920
- US-A1- 2007 296 154

## Description

La présente invention est relative à un piston hydraulique à valve porte-joint de refroidissement et de lubrification, ledit piston coopérant avec un cylindre pour former par exemple la chambre hydraulique de volume variable d'une pompe ou d'un moteur hydraulique à pistons axiaux ou radiaux.

Un tel piston pour pompes et moteurs hydrauliques est connu du brevet EP 3025060 B1. L'étanchéité des pistons des pompes et moteurs hydrauliques à pistons axiaux ou radiaux est le plus souvent obtenue en laissant un faible jeu diamétral entre lesdits pistons et le cylindre avec lequel ils coopèrent. A titre d'exemple, ledit jeu peut valoir de vingt à quarante micromètres pour un piston de vingt millimètres de diamètre. Un jeu diamétral aussi petit permet d'obtenir des niveaux d'étanchéité acceptables jusqu'à des pressions opérationnelles de l'ordre de trois à cinq cent bars, ceci sous réserve de prévoir un recouvrement suffisant entre le piston et le cylindre dans lequel translate ledit piston.

Prévoir un petit jeu diamétral entre le piston et son cylindre forme une solution d'étanchéité simple et robuste. Le prix de revient en fabrication de ladite solution reste en outre modéré, malgré la précision d'usinage élevée qu'elle requiert.

On remarque que les pistons des pompes et moteurs hydrauliques à pistons axiaux sont ordinairement terminés par des patins articulés qui glissent sur un plateau incliné ou inclinable selon que lesdites pompes ou lesdits moteurs sont à cylindrée fixe ou à cylindrée variable. Lorsque ledit plateau est incliné et qu'une pression est appliquée sur l'un quelconque des pistons par quelque fluide hydraulique que ce soit - par exemple par de l'huile - l'effort qu'exerce le patin articulé dudit piston sur ledit plateau produit par réaction un effort radial entre ledit piston et le cylindre avec lequel il coopère.

Ledit effort radial génère une pression de contact entre ledit piston et son cylindre. Ladite pression s'applique, de première part, au niveau de l'extrémité dudit piston qui est opposée au patin articulé, et de deuxième part, au niveau de l'extrémité dudit cylindre qui débouche en direction du plateau incliné.

Les pistons des pompes et moteurs hydrauliques tels qu'ils viennent d'être décrits sont responsables de pertes énergétiques de diverses natures qui réduisent l'efficacité énergétique totale desdites pompes et desdits moteurs.

Parmi lesdites pertes énergétiques, on distingue en premier lieu les fuites de fluide hydraulique. Sous l'effet de la pression, du fluide hydraulique est en effet expulsé de la chambre hydraulique via l'espace que forme le jeu diamétral laissé entre le piston et le cylindre, puis s'échappe au niveau de l'extrémité du cylindre qui débouche en direction du plateau incliné. On note d'ailleurs qu'en effectuant des mouvement de va-et-vient dans son cylindre, le piston produit un effet de pompe au niveau du jeu diamétral laissé entre lui et ledit cylindre, ce qui augmente le débit de fuite hydraulique.

Le cisaillement du fluide hydraulique qui est intercalé entre le piston et le cylindre compte aussi parmi lesdites pertes énergétiques. Ledit cisaillement produit un effort résistant qui s'oppose à la rotation de la pompe ou du moteur hydraulique. Cet effort de cisaillement est d'autant plus important que d'une part, le fluide hydraulique est visqueux, et que d'autre part, le jeu diamétral laissé entre le piston et le cylindre est faible.

Enfin, lesdites pertes énergétiques proviennent aussi de l'effort qu'exerce le patin de piston sur le plateau incliné. Ledit effort se traduit par des efforts radiaux exercés par le piston sur son cylindre. Conjugués avec le déplacement dudit piston dans ledit cylindre, lesdits efforts radiaux génèrent des pertes énergétiques qui sont le produit desdits efforts par le coefficient de frottement entre le piston et son cylindre, multiplié par la distance parcourue par ledit piston dans ledit cylindre.

Comme on le comprend aisément à la lecture de ce qui précède, pour réduire la perte énergétique totale produite par les pistons des pompes et moteurs hydrauliques, il faut au minimum poursuivre le triple objectif de limiter autant que possible les fuites hydrauliques, de réduire au maximum les pertes par cisaillement du fluide hydraulique, et de minimiser les pertes par frottement produites au niveau des contacts entre le piston et son cylindre.

Il existe néanmoins diverses contradictions qui s'opposent à la poursuite simultanée de ces trois objectifs.

En effet, en l'état de l'art et de la technique, réduire les fuites de fluide hydraulique ne peut pas se faire en réduisant encore le jeu diamétral laissé entre le piston et son cylindre car les pertes par cisaillement augmenteraient de façon inacceptable.

En effet, ces pertes par cisaillement augmentées se traduiraient par une quantité de chaleur accrue émise dans un volume plus faible de fluide hydraulique compris dans le jeu diamétral laissé entre le piston et son cylindre. Il résulterait de cette situation que la température dudit fluide augmenterait drastiquement tandis que sa viscosité baisserait. Ledit fluide perdrait une grande partie de ses qualités lubrifiantes ce qui augmenterait les pertes par frottement qui en retour augmenteraient encore la quantité de chaleur reçue par le fluide hydraulique compris dans le jeu diamétral.

S'ensuivrait alors un emballement des émissions de chaleur et de la hausse de la température locale du fluide hydraulique, avec au delà d'un certain seuil la destruction par cokéfaction dudit fluide compris dans le jeu diamétral laissé entre le piston et son cylindre. En plus de cela, la température du piston pourrait monter au point que ledit piston se dilate plus vite que le cylindre dans lequel il translate. Ce dernier effet conduirait au grippage dudit piston dans ledit cylindre.

Réduire le jeu diamétral laissé entre le piston et son cylindre pour réduire les fuites de fluide hydraulique n'est donc guère possible, et ce d'autant plus que pour réduire les pertes par cisaillement, il faudrait au contraire augmenter ledit jeu. En effet, les pertes par cisaillement augmentent approximativement de façon inversement proportionnelle audit jeu.

Outre réduire les pertes par cisaillement, augmenter ledit jeu réduirait également les pertes par frottement induites par les efforts radiaux exercés par le piston sur son cylindre. En effet, augmenter raisonnablement le jeu diamétral laissé entre le piston et le cylindre favoriserait la formation et le maintien d'un régime de lubrification hydrodynamique entre ledit piston et ledit cylindre, notamment parce que le film de fluide hydraulique - s'il s'agit d'huile par exemple - serait plus épais, et parce que ce dernier serait maintenu à plus basse température.

Toutefois, augmenter le jeu diamétral entre le piston et son cylindre n'est pas non plus la solution car ceci se ferait au détriment des fuites hydrauliques qui passent entre ces deux pièces, lesquelles augmenteraient drastiquement.

Comme les objectifs qui viennent d'être décrits sont contradictoires dans leur réalisation, le jeu diamétral entre les pistons et les cylindres des pompes et moteurs hydrauliques à pistons axiaux ou radiaux selon l'état de l'art résulte d'un compromis entre les fuites hydrauliques d'une part, et les pertes par cisaillement d'huile et par frottement mécanique d'autre part.

On pourrait imaginer sortir de ce compromis en plaçant un joint d'étanchéité sur le piston soit à l'extrémité dudit piston la plus proche de la chambre hydraulique, soit en son milieu en prenant garde que ledit joint ne puisse jamais sortir du cylindre. Ainsi, il serait possible d'avoir un fort jeu diamétral entre le piston et son cylindre puisque l'étanchéité ne serait plus tributaire du jeu.

Le problème de quelque joint ou segment d'étanchéité que ce soit, c'est que le piston n'est plus assez lubrifié dans son cylindre car trop peu d'huile est introduite dans l'espace formé par le jeu diamétral laissé entre le piston et son cylindre.

En outre, ladite huile doit être renouvelée en permanence pour évacuer la chaleur émise par les fuites, les pertes par cisaillement, et les pertes par frottement résiduelles. Installer un joint étanche sur les pistons des pompes et moteurs hydrauliques à pistons axiaux ou radiaux conduit donc immanquablement au séchage du cylindre et au grippage du piston dans ledit cylindre, et à un vieillissement prématuré du fluide hydraulique localement soumis à des températures excessives.

En outre, on remarquera que certaines pompes ou certains moteurs hydrauliques comportent des pièces mécaniques qui sont positionnées à l'opposé de la chambre hydraulique et qui sont lubrifiées et/ou refroidies grâce au débit de fuite passant entre le piston et le cylindre. Empêcher toute fuite de fluide hydraulique entre le piston et son cylindre conduirait à devoir lubrifier lesdites pièces par un apport d'huile volontaire via un injecteur par exemple.

C'est pour résoudre ces différents problèmes que le piston hydraulique à valve porte-joint de refroidissement et de lubrification selon l'invention permet, en fonction de son mode de réalisation :
- Le montage d'un joint ou segment d'étanchéité entre le piston et son cylindre qui jugule les fuites de fluide hydraulique passant dans le jeu diamétral laissé entre le piston et son cylindre lorsque une pression élevée règne dans la chambre hydraulique de la pompe hydraulique ou du moteur hydraulique qui le reçoit ;
- De laisser passer un débit de fuite d'huile de lubrification et de refroidissement important au niveau du jeu diamétral entre le piston et son cylindre seulement lorsque une pression basse règne dans la chambre hydraulique de la pompe hydraulique ou du moteur hydraulique qui le reçoit ;
- D'optimiser le jeu diamétral laissé entre le piston et son cylindre pour minimiser les pertes par cisaillement et par frottement en n'augmentant que très marginalement les pertes énergétiques liées aux fuites de fluide hydraulique passant par le jeu diamétral laissé entre le piston et son cylindre ;
- D'augmenter significativement le rendement toute pompe hydraulique ou moteur hydraulique qui le reçoit ;
- De n'augmenter que très marginalement le prix de revient en fabrication de la pompe ou du moteur hydraulique qui le reçoit.

Il est entendu qu'outre son application aux pompes hydrauliques et aux moteurs hydrauliques à pistons axiaux ou radiaux, le piston hydraulique à valve porte-joint de refroidissement et de lubrification suivant l'invention peut s'appliquer à toute autre pompe, moteur, moteur-pompe ou vérin, que ces organes soient hydrauliques ou pneumatiques, et dès lors que la configuration desdits organes permet avantageusement d'exploiter ledit piston suivant l'invention.

Les autres caractéristiques de la présente invention ont été décrites dans la description et dans les revendications secondaires dépendantes directement ou indirectement de la revendication principale.

Le piston hydraulique comprend un corps cylindrique logé à faible jeu dans un cylindre, ledit piston pouvant translater dans ledit cylindre avec lequel il forme une chambre hydraulique de volume variable, une première extrémité dudit piston présentant une face de compression débouchant dans la chambre hydraulique pour recevoir la pression d'un fluide tandis que l'autre extrémité dudit piston présente une face d'appui de piston pour exercer un effort sur des moyens de transmission.

Le piston hydraulique suivant la présente invention comprend :
- Au moins une valve porte-joint de refroidissement et de lubrification positionnée du côté de la face de compression et dans le prolongement du corps cylindrique par rapport auquel elle peut se mouvoir en translation longitudinale sur une faible course, ladite valve comprenant de première part, une face axiale de valve côté piston qui présente une portée circulaire de fermeture de débit définissant une ligne de contact circulaire qui peut entrer en contact avec une surface de contact de valve aménagée sur la face de compression le diamètre de ladite ligne étant inférieur à celui du cylindre, ladite valve présentant de deuxième part, une surface cylindrique externe de valve qui expose des moyens d'étanchéité qui peuvent entrer en contact étanche avec le cylindre ladite surface cylindrique étant logée avec un jeu diamétral dans ledit cylindre, cependant que ladite valve comprend de troisième part, une face axiale de valve côté chambre qui fait face à la chambre hydraulique ;
- Au moins une chambre intermédiaire de sortie de fluide notamment formée - à l'intérieur de la ligne de contact circulaire - par la face axiale de valve côté piston et par la face de compression ;
- Au moins un orifice de calibrage de débit qui traverse la valve porte-joint de refroidissement et de lubrification de part en part principalement dans le sens axial, la chambre hydraulique communiquant avec la chambre intermédiaire de sortie de fluide via ledit orifice ;
- Au moins une liaison-butée de valve qui relie la valve porte-joint de refroidissement et de lubrification au corps cylindrique, ladite liaison-butée permettant à ladite valve de se rapprocher dudit corps au point que la portée circulaire de fermeture de débit entre en contact avec la surface de contact de valve, cependant que ladite liaison-butée interdit à ladite valve de s'éloigner dudit corps de plus d'une certaine distance ;
- Au moins un ressort de rappel de valve qui tend à éloigner la valve porte-joint de refroidissement et de lubrification du corps cylindrique.

Le piston hydraulique suivant la présente invention comprend un ressort de rappel de valve qui est en tout ou partie logé à l'intérieur de la chambre intermédiaire de sortie de fluide.

Le piston hydraulique suivant la présente invention comprend des moyens d'étanchéité qui sont constitués d'au moins un segment à coupe logé dans une gorge de segment aménagée dans la valve porte-joint de refroidissement et de lubrification ou rapportée en tout ou partie sur ladite valve, ladite gorge débouchant au niveau de la surface cylindrique externe de valve.

Le piston hydraulique suivant la présente invention comprend des moyens d'étanchéité qui sont constitués d'au moins un joint circulaire souple logé dans une gorge de segment aménagée dans la valve porte-joint de refroidissement et de lubrification ou rapportée en tout ou partie sur ladite valve, ladite gorge débouchant au niveau de la surface cylindrique externe de valve.

Le piston hydraulique suivant la présente invention comprend un corps cylindrique qui présente une gorge de dégagement anti-cisaillement.

Le piston hydraulique suivant la présente invention comprend un diamètre de l'extrémité axiale du corps cylindrique située du côté de la face de compression qui se réduit graduellement sur une certaine longueur pour former une dépouille de portance.

Le piston hydraulique suivant la présente invention comprend un diamètre de l'extrémité axiale du cylindre située à l'opposé de la chambre hydraulique qui augmente graduellement sur une certaine longueur pour former un épanouissement de portance.

Le piston hydraulique suivant la présente invention comprend une liaison-butée de valve qui est constituée d'un axe de liaison-butée qui émerge solidairement de la face de compression pour d'une part, traverser de part en part la valve porte-joint de refroidissement et de lubrification via un orifice de liaison-butée aménagé dans ladite valve et pour d'autre part, dépasser de la face axiale de valve côté chambre pour exposer à ladite face une butée de valve.

Le piston hydraulique suivant la présente invention comprend un orifice de calibrage de débit qui est constitué du jeu laissé entre l'axe de liaison-butée et l'orifice de liaison-butée.

Le piston hydraulique suivant la présente invention comprend une liaison-butée de valve qui est constituée d'un prolongateur de valve de liaison-butée qui émerge solidairement de la face axiale de valve côté piston pour d'une part, pénétrer dans le corps cylindrique via un puits de liaison-butée aménagé dans ledit corps et d'autre part, exposer une butée de prolongateur qui coopère avec une butée de puits qu'expose le puits de liaison-butée.

Le piston hydraulique suivant la présente invention comprend une butée de prolongateur qui est constituée d'au moins une griffe souple qui s'encliquète dans une gorge de butée qui forme la butée de puits.

Le piston hydraulique suivant la présente invention comprend un ressort de rappel de valve qui est en tout ou partie logé dans un évidemment de prolongateur aménagé axialement dans le prolongateur de valve de liaison-butée.

La description qui va suivre en regard des dessins annexés et donnés à titre d'exemples non limitatifs permettra de mieux comprendre l'invention, les caractéristiques qu'elle présente, et les avantages qu'elle est susceptible de procurer :
Figure 1 est une vue en coupe schématique d'une pompe hydraulique à pistons axiaux à cylindrée variable équipée de pistons hydrauliques à valve porte-joint de refroidissement et de lubrification selon l'invention.
Figure 2 est une vue en coupe schématique du piston hydraulique à valve porte-joint de refroidissement et de lubrification selon l'invention, la liaison-butée de valve étant constituée d'un axe de liaison-butée tandis qu'un segment à coupe forme les moyens d'étanchéité.
Figure 3 est une vue en coupe schématique du piston hydraulique à valve porte-joint de refroidissement et de lubrification selon l'invention, la liaison-butée de valve étant constituée d'un prolongateur de valve de liaison-butée qui expose une butée de prolongateur constituée de griffes souples qui s'encliquètent dans une gorge de butée, cependant qu'un joint circulaire souple forme les moyens d'étanchéité.
Figures 4 et 5 sont des vues rapprochées en coupe schématique de la variante du piston hydraulique à valve porte-joint de refroidissement et de lubrification selon l'invention représentée en figure 2, lesdites figures 4 et 5 illustrant respectivement le fonctionnement de ladite variante quand la pression qui règne dans la chambre hydraulique est basse, puis haute.
Figure 6 est une vue tridimensionnelle en écorché de la variante représentée en figure 2 du piston hydraulique à valve porte-joint de refroidissement et de lubrification selon l'invention, ledit piston étant assemblé.
Figure 7 est une vue tridimensionnelle éclatée de la variante représentée en figure 2 du piston hydraulique à valve porte-joint de refroidissement et de lubrification selon l'invention.
Figure 8 est une vue tridimensionnelle en écorché de la variante représentée en figure 3 du piston hydraulique à valve porte-joint de refroidissement et de lubrification selon l'invention, ledit piston étant assemblé.
Figure 9 est une vue tridimensionnelle éclatée de la variante représentée en figure 3 du piston hydraulique à valve porte-joint de refroidissement et de lubrification selon l'invention.

### DESCRIPTION DE L'INVENTION :

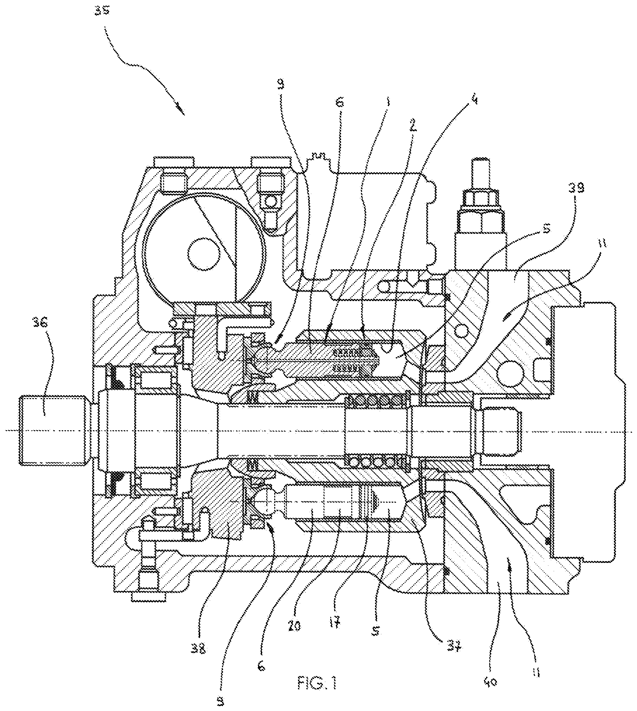

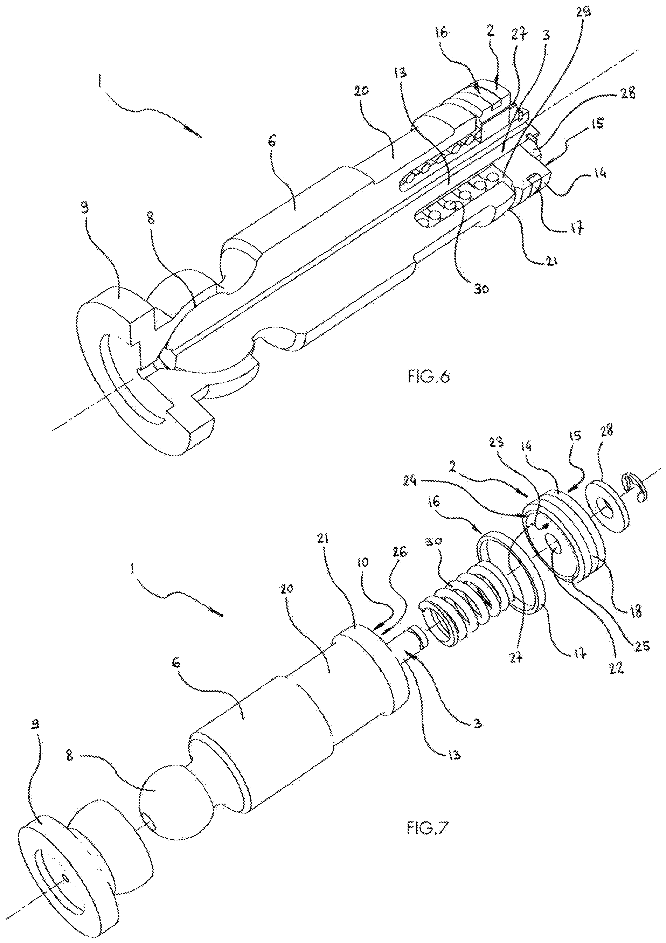

On a montré en figures 1 à 9 le piston hydraulique 1 à valve porte-joint de refroidissement et de lubrification 2, divers détails de ses composants, ses variantes, et ses accessoires.

Comme on le voit particulièrement en figures 1 à 4, le piston hydraulique 1 est constitué d'un corps cylindrique 6 logé à faible jeu dans un cylindre 4. Ledit piston 1 peut translater dans ledit cylindre 4 avec lequel il forme une chambre hydraulique 5 de volume variable.

Les figures de 1 à 9 montrent clairement qu'une première extrémité dudit piston 1 présente une face de compression 10 débouchant dans la chambre hydraulique 5 pour recevoir la pression d'un fluide 11 tandis que l'autre extrémité dudit piston 3 présente une face d'appui de piston 8 pour exercer un effort sur des moyens de transmission 9.

Les figures de 1 à 9 illustrent que le piston hydraulique 1 à valve porte-joint de refroidissement et de lubrification 2 suivant l'invention comprend au moins une valve porte-joint de refroidissement et de lubrification 2 positionnée du côté de la face de compression 10 et dans le prolongement du corps cylindrique 6 par rapport auquel elle peut se mouvoir en translation longitudinale sur une faible course.

La valve porte-joint de refroidissement et de lubrification 2 comprend de première part, une face axiale de valve côté piston 23 qui présente une portée circulaire de fermeture de débit 24 définissant une ligne de contact circulaire 25 qui peut entrer en contact avec une surface de contact de valve 26 aménagée sur la face de compression 10 le diamètre de ladite ligne 25 étant inférieur à celui du cylindre 4.

En outre et de deuxième part, la valve porte-joint de refroidissement et de lubrification 2 présente une surface cylindrique externe de valve 14 qui expose des moyens d'étanchéité 16 qui peuvent entrer en contact étanche avec le cylindre 4 ladite surface cylindrique 14 étant logée avec un jeu diamétral dans ledit cylindre 4.

Pour finir et de troisième part, la valve porte-joint de refroidissement et de lubrification 2 comprend une face axiale de valve côté chambre 15 qui fait face à la chambre hydraulique 5.

On note que selon un mode particulier de réalisation du piston hydraulique 1 suivant l'invention, les moyens d'étanchéité 16 peuvent être simplement constitués d'un jeu diamétral très faible laissé entre la surface cylindrique externe de valve 14 et le cylindre 4.

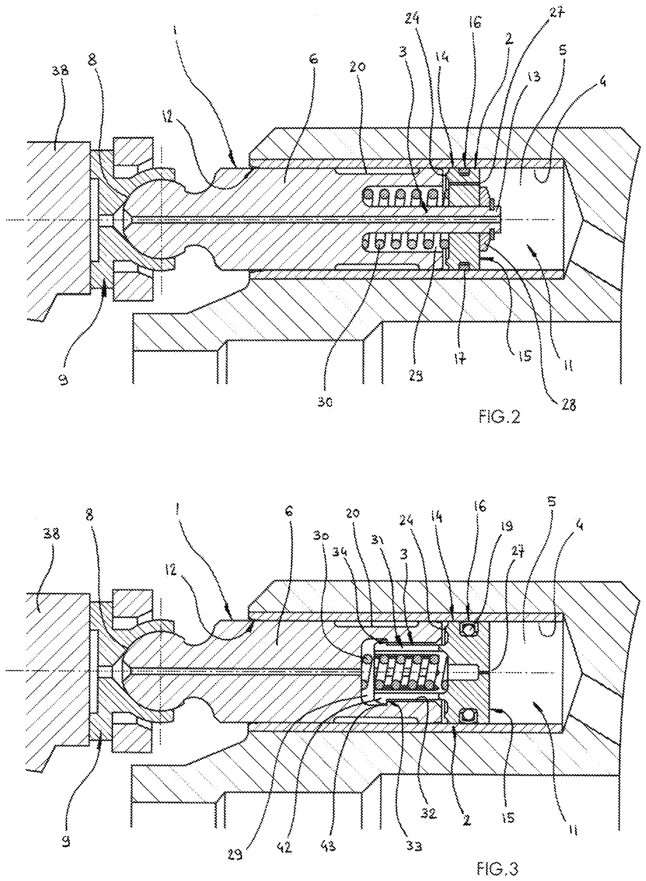

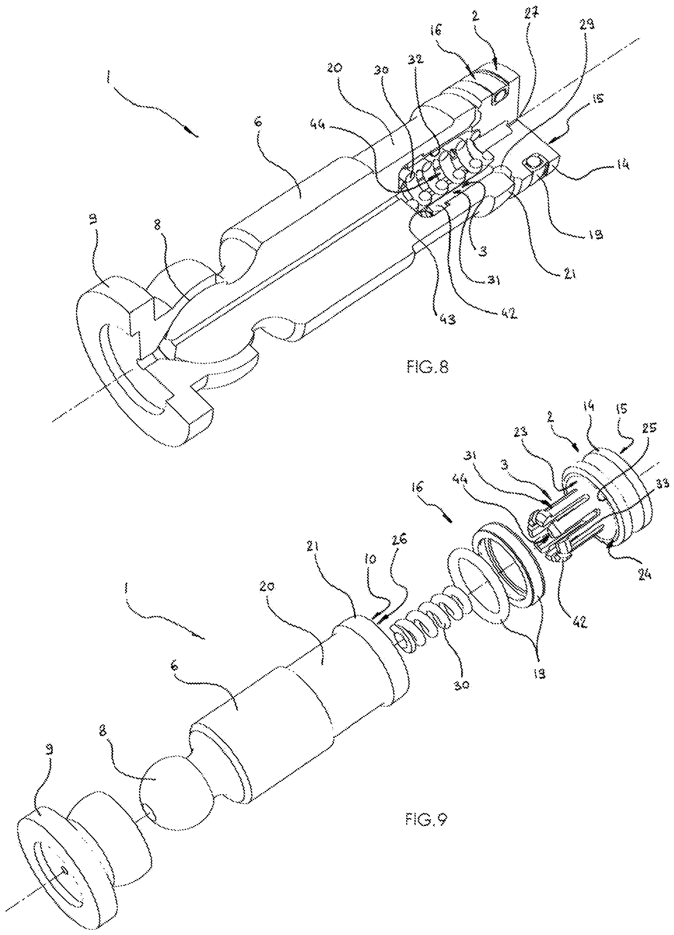

En figures 2 à 6 et en figure 8, on remarquera que le piston hydraulique 1 à valve porte-joint de refroidissement et de lubrification 2 suivant l'invention présente au moins une chambre intermédiaire de sortie de fluide 29 notamment formée - à l'intérieur de la ligne de contact circulaire 25 - par la face axiale de valve côté piston 23 et par la face de compression 10.

On remarquera aussi en figures 2 à 8 que le piston hydraulique 1 à valve porte-joint de refroidissement et de lubrification 2 suivant l'invention présente au moins un orifice de calibrage de débit 27 qui traverse la valve porte-joint de refroidissement et de lubrification 2 de part en part principalement dans le sens axial, la chambre hydraulique 5 communiquant avec la chambre intermédiaire de sortie de fluide 29 via ledit orifice 27.

Sur les figures 2 à 9, il est particulièrement visible que le piston hydraulique 1 suivant l'invention comprend au moins une liaison-butée de valve 3 qui relie la valve porte-joint de refroidissement et de lubrification 2 au corps cylindrique 6, ladite liaison-butée 3 permettant à ladite valve 2 de se rapprocher dudit corps 6 au point que la portée circulaire de fermeture de débit 24 entre en contact avec la surface de contact de valve 26, cependant que ladite liaison-butée 3 interdit à ladite valve 2 de s'éloigner dudit corps 6 de plus d'une certaine distance.

On note que selon un mode particulier de réalisation du piston hydraulique 1 suivant l'invention, la liaison-butée de valve 3 peut autoriser une légère excentration et/ou un léger pivotement et/ou une rotation autour de son axe longitudinal de la valve porte-joint de refroidissement et de lubrification 2 par rapport au corps cylindrique 6.

Enfin, les figures 1 à 9 montrent que le piston hydraulique 1 à valve porte-joint de refroidissement et de lubrification 2 suivant l'invention comporte au moins un ressort de rappel de valve 30 qui tend à éloigner la valve porte-joint de refroidissement et de lubrification 2 du corps cylindrique 6, ledit ressort pouvant être de tout type connu de l'homme de l'art, et fait de toute matière élastique sans restriction aucune.

Comme le montrent les figures 1 à 6 et la figure 8, le ressort de rappel de valve 30 peut être en tout ou partie logé à l'intérieur de la chambre intermédiaire de sortie de fluide 29.

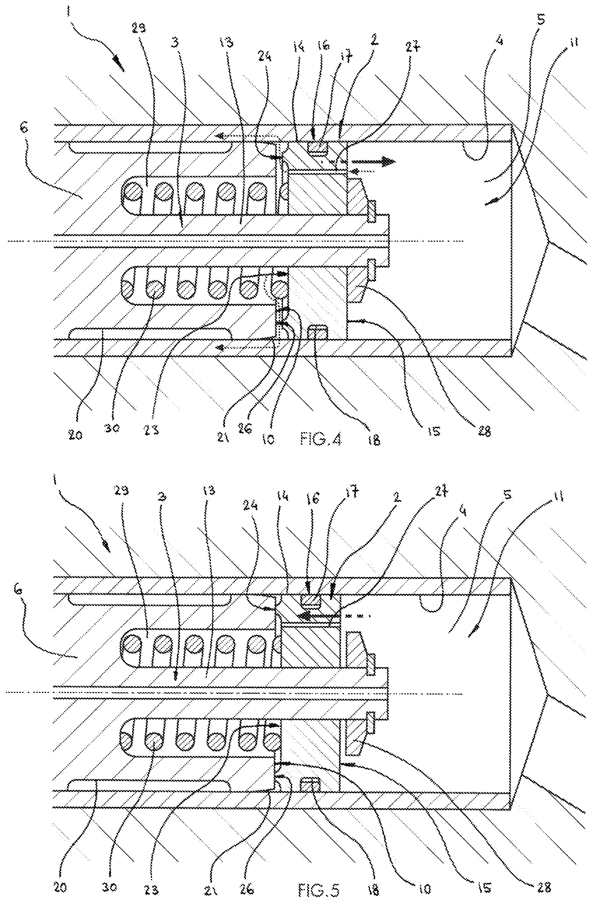

En figures 1 et 2 et en figures 4 à 7, on voit que les moyens d'étanchéité 16 peuvent être constitués d'au moins un segment à coupe 17 logé dans une gorge de segment 18 aménagée dans la valve porte-joint de refroidissement et de lubrification 2 ou rapportée en tout ou partie sur ladite valve 2, ladite gorge 18 débouchant au niveau de la surface cylindrique externe de valve 14.

On notera que le profil dudit segment 17 peut être bombé ou de quelque géométrie que ce soit tandis que la surface externe dudit segment 17 peut être maintenue plaquée sur la paroi interne du cylindre 4 sous l'effet de la pression du fluide 11 que contient la chambre hydraulique 5.

Pour une étanchéité accrue, plusieurs segments à coupe 17 peuvent être logés dans la même gorge de segment 18. En ce cas, avantageusement, les coupes desdits segments 18 peuvent être angulairement décalées pour former un barrage plus efficace à l'écoulement de tout fluide 11 de fuite au niveau desdits segments 18.

A titre de variante de réalisation du piston hydraulique 1 à valve porte-joint de refroidissement et de lubrification 2 suivant l'invention, on a montré en figure 3 et en figures 8 et 9 que les moyens d'étanchéité 16 peuvent être constitués d'au moins un joint circulaire souple 19 logé dans une gorge de segment 18 aménagée dans la valve porte-joint de refroidissement et de lubrification 2 ou rapportée en tout ou partie sur ladite valve 2, ladite gorge 18 débouchant au niveau de la surface cylindrique externe de valve 14.

On note que le joint circulaire souple 19 peut par exemple être fait d'un tore en élastomère, ou être de type composite notamment constitué d'un joint torique en élastomère qui coopère avec une bague en matière plastique chargée ou non de particules antifriction et/ou anti-abrasion.

On voit en figures 1 à 9 que le corps cylindrique 6 peut présenter une gorge de dégagement anti-cisaillement 20 qui est axialement aménagée dans une zone qui n'est soumise à aucune pression de contact significative entre ledit corps 6 et le cylindre 4 pendant le fonctionnement du piston hydraulique 1.

Ladite gorge de dégagement anti-cisaillement 20 permet notamment de réduire l'effort résistant de cisaillement que génère le fluide 11 compris dans le jeu diamétral laissé entre le corps cylindrique 6 et le cylindre 4 lorsque le piston hydraulique 1 se déplace, ce qui a pour effet d'améliorer le rendement énergétique total du piston hydraulique 1 suivant l'invention.

Les figures 4 à 9 en particulier montrent que le diamètre de l'extrémité axiale du corps cylindrique 6 située du côté de la face de compression 10 peut se réduire graduellement sur une certaine longueur pour former une dépouille de portance 21 qui, lorsque le piston hydraulique 1 remonte dans le cylindre 4 en direction de la chambre hydraulique 5, force du fluide 11 à pénétrer entre ladite extrémité axiale du corps cylindrique 6 et le cylindre 4 au niveau du contact entre ladite extrémité et ledit cylindre 4, ceci pour favoriser l'établissement d'un régime de lubrification hydrodynamique au niveau dudit contact et à réduire les pertes par frottement générées par le déplacement du piston hydraulique 1 dans le cylindre 4.

En figures 2 et 3, on remarque d'ailleurs que le diamètre de l'extrémité axiale du cylindre 4 située à l'opposé de la chambre hydraulique 5 peut quant à lui augmenter graduellement sur une certaine longueur pour former un épanouissement de portance 12 qui, lorsque le piston hydraulique 1 remonte dans le cylindre 4 en direction de la chambre hydraulique 5, force du fluide 11 à pénétrer entre le corps cylindrique 6 et ladite extrémité axiale du cylindre 4 au niveau du contact entre ladite extrémité et ledit cylindre 4, ceci pour favoriser l'établissement d'un régime de lubrification hydrodynamique au niveau dudit contact et à réduire les pertes par frottement générées par le déplacement du piston hydraulique 1 dans le cylindre 4.

Les figures 1 et 2 et les figures 4 à 7 montrent que selon une variante du piston hydraulique 1 à valve porte-joint de refroidissement et de lubrification 2 suivant l'invention, la liaison-butée de valve 3 peut être constituée d'un axe de liaison-butée 13 qui émerge solidairement de la face de compression 10 pour d'une part, traverser de part en part la valve porte-joint de refroidissement et de lubrification 2 via un orifice de liaison-butée 22 aménagé dans ladite valve 2 et pour d'autre part, dépasser de la face axiale de valve côté chambre 15 pour exposer à ladite face 15 une butée de valve 28 qui détermine la distance maximale d'éloignement de la valve porte-joint de refroidissement et de lubrification 2 du corps cylindrique 6.

On note que l'axe de liaison-butée 13 peut être rapporté sur le corps cylindrique 6 ou être réalisé dans le même lopin de matière que ledit corps 6. On note aussi que l'orifice de calibrage de débit 27 peut être constitué du jeu laissé entre l'axe de liaison-butée 13 et l'orifice de liaison-butée 22, ledit jeu pouvant le cas échéant être complété d'une encoche axiale aménagée dans l'orifice de liaison-butée 22, ladite encoche étant par exemple réalisée par brochage.

Selon une autre variante du piston hydraulique 1 à valve porte-joint de refroidissement et de lubrification 2 suivant l'invention montrée en figure 3 et en figures 8 et 9, la liaison-butée de valve 3 peut être constituée d'un prolongateur de valve de liaison-butée 31 qui émerge solidairement de la face axiale de valve côté piston 23 pour d'une part, pénétrer dans le corps cylindrique 6 via un puits de liaison-butée 32 aménagé dans ledit corps 6 et d'autre part, exposer une butée de prolongateur 33 qui coopère avec une butée de puits 34 qu'expose le puits de liaison-butée 32, les deux dites butées 33, 34 déterminant - lorsqu'elles sont au contact l'une de l'autre - la distance maximale d'éloignement de la valve porte-joint de refroidissement et de lubrification 2 par rapport au corps cylindrique 6.

Selon cette dernière variante, la butée de prolongateur 33 peut être constituée d'au moins une griffe souple 42 qui s'encliquète dans une gorge de butée 43 qui forme la butée de puits 34. On note que selon cette configuration particulière, lors de l'assemblage du piston hydraulique 1 suivant l'invention et plus précisément, lors de l'introduction du prolongateur de valve de liaison-butée 13 dans le puits de liaison-butée 32, la griffe souple 42 est prévue pour se tordre dans le domaine élastique du matériau qui la constitue pour pénétrer dans le puits de liaison-butée 32 jusqu'à dépasser la gorge de butée 43 dans laquelle elle se détend pour s'encliqueter de sorte que la valve porte-joint de refroidissement et de lubrification 2 se retrouve définitivement reliée au corps cylindrique 6 dont elle ne peut plus sortir.

La figure 3 et les figures 8 et 9 montrent que le ressort de rappel de valve 30 peut être en tout ou partie logé dans un évidemment de prolongateur 44 aménagé axialement dans le prolongateur de valve de liaison-butée 13.

### FONCTIONNEMENT DE L'INVENTION :

Le fonctionnement du piston hydraulique 1 à valve porte-joint de refroidissement et de lubrification 2 selon l'invention se comprend aisément au vu des figures 1 à 9.

La figure 1 montre le piston hydraulique 1 appliqué à une pompe hydraulique à pistons axiaux à cylindrée variable 35 connue en soi.

Lorsqu'un arbre de transmission 36 que possède ladite pompe 35 est mis en rotation par une source motrice non-représentée, ledit arbre 36 entraîne à son tour un barillet 37 en rotation, ce dernier étant solidaire dudit arbre 36.

Lorsqu'un plateau inclinable 38 que comporte ladite pompe 35 s'incline, concomitamment, les pistons hydrauliques 1 de ladite pompe 35 se mettent à effectuer des allers et retours dans le cylindre 4 avec lequel ils coopèrent. Il résulte desdits allers et retours que lesdits pistons 1 aspirent du fluide 11 dans un conduit d'admission 39 qui est alimenté en dit fluide 11 sous une pression basse de par exemple vingt bars, puis expulsent ledit fluide 11 dans un conduit de refoulement 40 dans lequel ledit fluide 11 est porté à une pression de par exemple quatre cents bars.

On supposera ici que le jeu diamétral laissé entre le corps cylindrique 6 du piston hydraulique 1 suivant l'invention et le cylindre 4 avec lequel il coopère est à titre d'exemple non-limitatif de l'ordre de quatre-vingt à cent micromètres, soit significativement supérieur à celui de l'ordre de vingt à quarante micromètres ordinairement laissé entre le piston et le cylindre 4 des pompes hydrauliques à pistons axiaux à cylindrée variable 35 selon l'art antérieur. En effet, selon le piston hydraulique 1 suivant l'invention, ledit jeu diamétral n'est plus déterminé sur des critères d'étanchéité - au contraire une certaine perméabilité est recherchée, mais principalement sur des critères de qualité de guidage générant le moins possible de pertes par frottement et d'usure.

On supposera également ici que, comme illustré en figures 1, 2 et 4 à 7, la valve porte-joint de refroidissement et de lubrification 2 que comporte chaque piston hydraulique 1 expose des moyens d'étanchéité 16 constitués d'un segment à coupe 17 logé dans une gorge de segment 18 aménagée dans ladite valve 2 et débouchant au niveau de la surface cylindrique externe de valve 14.

On remarque sur lesdites figures 1, 2 et 4 à 7 le profil bombé dudit segment 17 et plus précisément de la surface externe dudit segment 17 qui est ici prévue pour être maintenue plaquée sur la paroi interne du cylindre 4 sous l'effet de la pression du fluide 11 que contient la chambre hydraulique 5.

Ainsi, ledit segment à coupe 17 passe successivement de l'état « parqué » lorsque la pression régnant dans la chambre hydraulique 5 avec laquelle il coopère est de vingt bars, à l'état « en contact étanche » avec le cylindre 4 lorsque la pression régnant dans ladite chambre 5 est de quatre cents bars.

L'étanchéité poussée que le segment à coupe 17 réalise avec le cylindre 4 lorsque la pression régnant dans la chambre hydraulique 5 est de quatre cents bars ne laisse fuir que très peu de fluide 11 entre ledit segment 17 et ledit cylindre 4. De même, quand la pression régnant dans la chambre hydraulique 5 n'est que de vingt bars, bien que ledit segment 17 soit parqué, le faible jeu laissé entre ledit segment 17 et le cylindre 4 ne laisse que peu de fluide 11 s'échapper de la chambre hydraulique 5 via le jeu laissé entre la surface cylindrique externe de valve 14 de la valve porte-joint de refroidissement et de lubrification 2 d'une part, et le cylindre 4 d'autre part.

Pourtant, pour convenablement refroidir et lubrifier le corps cylindrique 6 au niveau de son ou de ses contacts avec le cylindre 4, plus de fluide 11 peut être nécessaire que n'en laisse passer le segment à coupe 17. C'est pourquoi - comme ceci est clairement illustré en figure 4 - lorsque la pression régnant dans la chambre hydraulique 5 est basse, le piston hydraulique 1 suivant l'invention permet à du fluide 11 supplémentaire de passer directement de la chambre hydraulique 5 à l'espace que constitue le jeu laissé entre le corps cylindrique 6 du piston hydraulique 1 et le cylindre 4, en contournant le segment à coupe 17.

Comme on le voit en figure 4, selon le piston hydraulique 1 suivant l'invention, ledit fluide 11 supplémentaire peut en effet passer d'abord via l'orifice de calibrage de débit 27 qui traverse la valve porte-joint de refroidissement et de lubrification 2 de part en part dans le sens axial la chambre hydraulique 5 communiquant avec la chambre intermédiaire de sortie de fluide 29 via ledit orifice 27, puis via la chambre intermédiaire de sortie de fluide 29, et enfin via le jeu laissé entre la portée circulaire de fermeture de débit 24 et la surface de contact de valve 26.

On remarque que ce dernier jeu n'existe que lorsque la pression régnant dans la chambre hydraulique 5 est basse, c'est-à-dire au voisinage de vingt bars selon l'exemple non-limitatif illustré ici.

En effet, comme on le déduit aisément de la figure 4, lorsque la pression régnant dans la chambre hydraulique 5 est de seulement vingt bars, l'effort qu'exerce la pression du fluide 11 sur la face axiale de valve côté chambre 15 est inférieur à l'effort qu'exerce le ressort de rappel de valve 30 sur la face axiale de valve côté piston 23.

En conséquence, la valve porte-joint de refroidissement et de lubrification 2 reste éloignée du corps cylindrique 6 ce qui laisse un jeu entre la portée circulaire de fermeture de débit 24 et la surface de contact de valve 26, ledit jeu laissant passer un débit de fluide 11 qui refroidit et à lubrifie ledit corps 6 au niveau de son ou de ses contacts avec le cylindre 4.

On note que le diamètre et la longueur de l'orifice de calibrage de débit 27 sont prévus pour produire la perte de charge nécessaire à l'obtention à basse pression - qui est selon cet exemple de vingt bars - du débit de fluide 11 recherché passant au travers du jeu laissé entre le corps cylindrique 6 et le cylindre 4.

On notera aussi que l'effort qu'exerce le fluide 11 sur la face axiale de valve côté chambre 15 correspond approximativement au produit de la pression dudit fluide 11 par l'aire de la section du cylindre 4 minorée de la section que définit l'intérieur de la portée circulaire de fermeture de débit 24. Ceci est vrai si la pression régnant dans la chambre hydraulique 5 est identique à la pression régnant dans la chambre intermédiaire de sortie de fluide 29 d'une part, et que la pression dans le jeu laissé entre le corps cylindrique 6 et le cylindre 4 est nulle d'autre part, ce qui n'est pas exactement le cas en pratique.

Ainsi, la pression régnant dans la chambre hydraulique 5 au-dessus de laquelle la valve porte-joint de refroidissement et de lubrification 2 est fermée - c'est à dire au-dessus de laquelle la portée circulaire de fermeture de débit 24 est au contact de la surface de contact de valve 26 - dépend du rapport existant entre la tare et la raideur du ressort de rappel de valve 30 d'une part, et l'aire que définit l'intérieur de la portée circulaire de fermeture de débit 24 d'autre part. A cela doivent s'ajouter les différentes pertes de charge qui sont placées en série sur le parcours du fluide 11, et qui sont détaillées plus loin.

Si le piston hydraulique 1 selon l'invention est prévu pour que l'effort qu'exerce la pression du fluide 11 sur la face axiale de valve côté chambre 15 devienne supérieur à l'effort qu'exerce le ressort de rappel de valve 30 sur la face axiale de valve côté piston 23 à partir d'une pression de vingt-cinq bars régnant dans la chambre hydraulique 5 et que, tenant compte de la raideur du ressort de rappel de valve 30, la valve porte-joint de refroidissement et de lubrification 2 est totalement fermée à trente-cinq bars, alors, du fluide 11 destiné à refroidir et à lubrifier le corps cylindrique 6 passera par l'orifice de calibrage de débit 27 dès lors que la pression régnant dans la chambre hydraulique 5 sera inférieure à trente-cinq bars.

Aussi, le rapport entre le débit de fluide 11 de refroidissement et de lubrification et la pression régnant dans la chambre hydraulique 5 est bien fixé d'une part, par la perte de charge que constitue l'orifice de calibrage de débit 27 à laquelle s'ajoute la somme des pertes de charges rencontrées sur son parcours par le fluide 11 débitant entre la chambre hydraulique 5 et le débouché du cylindre 4 opposé à ladite chambre 5, et d'autre part, par l'effort que produit le ressort de rappel de valve 30.

On note que l'énergie totale perdue du fait dudit débit de fluide 11 volontairement généré par le piston hydraulique 1 suivant l'invention reste dans tous les cas faible car la pression à laquelle s'opère ledit débit est basse, inférieure à trente-cinq bars.

Ainsi, le piston hydraulique 1 à valve porte-joint de refroidissement et de lubrification 2 selon l'invention permet-il d'assurer au corps cylindrique 6 un refroidissement et une lubrification additionnels significatifs à moindre coût énergétique, sans remettre en cause l'étanchéité produite par le segment à coupe 17 pris ici à titre d'exemple non-limitatif comme moyen d'étanchéité 16.

Il est donc bien possible grâce au piston hydraulique 1 à valve porte-joint de refroidissement et de lubrification 2 selon l'invention de prévoir un joint circulaire souple 19 ou un segment à coupe 17 sur les pistons hydrauliques 1 des pompes et moteurs hydrauliques étanches à haute pression, tout en générant à basse pression un débit de fuite d'huile de lubrification et de refroidissement important au niveau du jeu diamétral entre lesdits pistons 1 et le cylindre 4 avec lequel ils coopèrent, ceci au prix d'une réduction minimale du rendement volumétrique et énergétique de la pompe hydraulique ou du moteur hydraulique qui reçoit lesdits pistons 1.

Ceci permet bien de sortir du compromis imposé par les pistons hydrauliques selon l'état de l'art et dont résulte le jeu diamétral usuellement laissé entre lesdits pistons et leur cylindre 4. En effet, selon l'état de l'art, ledit jeu doit être suffisamment important pour laisser passer suffisamment de fluide 11 pour lubrifier et refroidir lesdits pistons et pour limiter les pertes par cisaillement et par frottement, mais pas trop important pour ne pas laisser fuir trop de fluide 11. Il en résulte un dilemme qui est éliminé par le piston hydraulique 1 à valve porte-joint de refroidissement et de lubrification 2 selon l'invention.

On remarque d'ailleurs que parmi les nouvelles opportunités offertes par le piston hydraulique 1 à valve porte-joint de refroidissement et de lubrification 2 selon l'invention, le corps cylindrique 6 peut présenter une gorge de dégagement anti-cisaillement 20. Cette configuration particulière montrée en figure 1 à 9 est permise puisque l'étanchéité du piston hydraulique 1 n'est plus assurée par un faible jeu laissé entre ledit piston 1 et le cylindre 4 avec lequel il coopère, mais pas des moyens d'étanchéité 16 qui peuvent être par exemple un segment à coupe 17 comme montré en figures 1, 2 et 4 à 7, ou un joint circulaire souple 19 comme illustré en figures 3, 8 et 9, et ceci, sans compromettre la bonne lubrification et le bon refroidissement dudit piston 1.

Ladite configuration permet de fortement réduire les pertes par cisaillement que génère le fluide 11 compris dans le jeu diamétral laissé entre le corps cylindrique 6 et le cylindre 4 lorsque le piston hydraulique 1 se déplace.

On note que ladite gorge de dégagement anti-cisaillement 20 est axialement aménagée dans une zone qui n'est soumise à aucune pression de contact significative entre le corps cylindrique 6 et le cylindre 4 pendant le fonctionnement du piston hydraulique 1, et qu'elle a pour effet d'améliorer le rendement énergétique total du piston hydraulique 1 suivant l'invention.

Pour encore améliorer ledit rendement, on remarque - particulièrement en figures 4 et 5 - que le diamètre de l'extrémité axiale du corps cylindrique 6 située du côté de la face de compression 10 se réduit graduellement sur une certaine longueur pour former une dépouille de portance 21 qui, lorsque le piston hydraulique 1 remonte dans le cylindre 4 en direction de la chambre hydraulique 5, force du fluide 11 à pénétrer entre ladite l'extrémité axiale du corps cylindrique 6 et le cylindre 4 au niveau du contact entre ladite l'extrémité et ledit cylindre 4. Cette configuration particulière du piston hydraulique 1 suivant l'invention favorise l'établissement d'un régime de lubrification hydrodynamique au niveau dudit contact et de réduit les pertes par frottement générées par le déplacement du piston hydraulique 1 dans le cylindre 4.

Dans le même objectif - particulièrement en figures 2 et 3 - on voit que le diamètre de l'extrémité axiale du cylindre 4 située à l'opposé de la chambre hydraulique 5 augmente graduellement sur une certaine longueur pour former un épanouissement de portance 12 qui, lorsque le piston hydraulique 1 remonte dans le cylindre 4 en direction de la chambre hydraulique 5, force du fluide 11 à pénétrer entre le corps cylindrique 6 et ladite extrémité axiale du cylindre 4 au niveau du contact entre ladite extrémité et ledit cylindre 4.

Les possibilités du piston hydraulique 1 à valve porte-joint de refroidissement et de lubrification 2 selon l'invention ne s'en limitent pas aux applications qui viennent d'être décrites et il doit d'ailleurs être entendu que la description qui précède n'a été donnée qu'à titre d'exemple et qu'elle ne limite nullement le domaine de ladite invention étant donné que ladite invention est définie par l'objet respectif des revendications.

## Revendications

1. Piston hydraulique (1) constitué d'un corps cylindrique (6) logé à faible jeu dans un cylindre (4), ledit piston (1) pouvant translater dans ledit cylindre (4) avec lequel il forme une chambre hydraulique (5) de volume variable, une première extrémité dudit piston (1) présentant une face de compression (10) débouchant dans la chambre hydraulique (5) pour recevoir la pression d'un fluide (11) tandis que l'autre extrémité dudit piston (3) présente une face d'appui de piston (8) pour exercer un effort sur des moyens de transmission (9), ledit piston (1) comprenant:
• Au moins une valve porte-joint de refroidissement et de lubrification (2) positionnée du côté de la face de compression (10) et dans le prolongement du corps cylindrique (6) par rapport auquel elle peut se mouvoir en translation longitudinale sur une faible course, ladite valve (2) comprenant de première part, une face axiale de valve côté piston (23) qui présente une portée circulaire de fermeture de débit (24) qui peut entrer en contact avec une surface de contact de valve (26) aménagée sur la face de compression (10), ladite valve (2) présentant de deuxième part, une surface cylindrique externe de valve (14) qui expose des moyens d'étanchéité (16) qui peuvent entrer en contact étanche avec le cylindre (4), ladite valve (2) comprenant de troisième part, une face axiale de valve côté chambre (15) qui fait face à la chambre hydraulique (5) ;
• Au moins une chambre intermédiaire de sortie de fluide (29) formée - à l'intérieur de la portée circulaire de fermeture de débit (24) - par la face axiale de valve côté piston (23) et par la face de compression (10) ;
• Au moins un orifice de calibrage de débit (27) qui traverse la valve porte-joint de refroidissement et de lubrification (2) de part en part principalement dans le sens axial, la chambre hydraulique (5) communiquant avec la chambre intermédiaire de sortie de fluide (29) via ledit orifice (27) et
• Au moins une liaison-butée de valve (3) qui relie la valve porte-joint de refroidissement et de lubrification (2) au corps cylindrique (6), ladite liaison-butée (3) permettant à ladite valve (2) de se rapprocher dudit corps (6) au point que la portée circulaire de fermeture de débit (24) entre en contact avec la surface de contact de valve (26), cependant que ladite liaison-butée (3) interdit à ladite valve (2) de s'éloigner dudit corps (6) de plus d'une certaine distance;
ledit piston (1) étant **caractérisé en ce qu'**il comprend :
• Au moins un ressort de rappel de valve (30) qui tend à éloigner la valve porte-joint de refroidissement et de lubrification (2) du corps cylindrique (6).

2. Piston hydraulique suivant la revendication 1, **caractérisé en ce que** le ressort de rappel de valve (30) est en tout ou partie logé à l'intérieur de la chambre intermédiaire de sortie de fluide (29).

3. Piston hydraulique suivant la revendication 1, **caractérisé en ce que** les moyens d'étanchéité (16) sont constitués d'au moins un segment à coupe (17) logé dans une gorge de segment (18) aménagée dans la valve porte-joint de refroidissement et de lubrification (2) ou rapportée en tout ou partie sur ladite valve (2), ladite gorge (18) débouchant au niveau de la surface cylindrique externe de valve (14).

4. Piston hydraulique suivant la revendication 1, **caractérisé en ce que** les moyens d'étanchéité (16) sont constitués d'au moins un joint circulaire souple (19) logé dans une gorge de segment (18) aménagée dans la valve porte-joint de refroidissement et de lubrification (2) ou rapportée en tout ou partie sur ladite valve (2), ladite gorge (18) débouchant au niveau de la surface cylindrique externe de valve (14).

5. Piston hydraulique suivant la revendication 1, **caractérisé en ce que** le corps cylindrique (6) présente une gorge de dégagement anti-cisaillement (20).

6. Piston hydraulique suivant la revendication 1, **caractérisé en ce que** le diamètre de l'extrémité axiale du corps cylindrique (6) située du côté de la face de compression (10) se réduit graduellement sur une certaine longueur pour former une dépouille de portance (21).

7. Piston hydraulique suivant la revendication 1, **caractérisé en ce que** le diamètre de l'extrémité axiale du cylindre (4) située à l'opposé de la chambre hydraulique (5) augmente graduellement sur une certaine longueur pour former un épanouissement de portance (12).

8. Piston hydraulique suivant la revendication 1, **caractérisé en ce que** la liaison-butée de valve (3) est constituée d'un axe de liaison-butée (13) qui émerge solidairement de la face de compression (10) pour d'une part, traverser de part en part la valve porte-joint de refroidissement et de lubrification (2) via un orifice de liaison-butée (22) aménagé dans ladite valve (2) et pour d'autre part, dépasser de la face axiale de valve côté chambre (15) pour exposer à ladite face (15) une butée de valve (28).

9. Piston hydraulique suivant la revendication 8, **caractérisé en ce que** l'orifice de calibrage de débit (27) est constitué du jeu laissé entre l'axe de liaison-butée (13) et l'orifice de liaison-butée (22).

10. Piston hydraulique suivant la revendication 1, **caractérisé en ce que** la liaison-butée de valve (3) est constituée d'un prolongateur de valve de liaison-butée (31) qui émerge solidairement de la face axiale de valve côté piston (23) pour d'une part, pénétrer dans le corps cylindrique (6) via un puits de liaison-butée (32) aménagé dans ledit corps (6) et d'autre part, exposer une butée de prolongateur (33) qui coopère avec une butée de puits (34) qu'expose le puits de liaison-butée (32).

11. Piston hydraulique suivant la revendication 10, **caractérisé en ce que** la butée de prolongateur (33) est constituée d'au moins une griffe souple (42) qui s'encliquète dans une gorge de butée (43) qui forme la butée de puits (34).

12. Piston hydraulique suivant la revendication 10, **caractérisé en ce que** le ressort de rappel de valve (30) est en tout ou partie logé dans un évidemment de prolongateur (44) aménagé axialement dans le prolongateur de valve de liaison-butée (13).

## Patentansprüche

1. Hydraulischer Kolben (1), der aus einem zylindrischen Körper (6) gebildet ist, der mit geringem Spiel in einem Zylinder (4) untergebracht ist, wobei der Kolben (1) in dem Zylinder (4) verschoben werden kann, mit dem er eine Hydraulikkammer (5) mit variablem Volumen bildet, wobei ein erstes Ende des Kolbens (1) eine Kompressionsfläche (10) aufweist, die in die Hydraulikkammer (5) mündet, um den Druck eines Fluids (11) aufzunehmen, während das andere Ende des Kolbens (3) eine Kolbenauflagefläche (8) aufweist, um eine Kraft auf Übertragungsmittel (9) auszuüben, wobei der Kolben (1) aufweist:
• mindestens ein Ventil zum Halten einer Kühl- und Schmierdichtung (2), das auf der Seite der Kompressionsfläche (10) und in der Verlängerung des zylindrischen Körpers (6) angeordnet ist, in Bezug auf den es sich in Längsverschiebung über einen geringen Hub bewegen kann, wobei das Ventil (2) erstens eine axiale Ventilfläche auf der Kolbenseite (23) aufweist, die eine kreisförmige Fläche zum Absperren des Durchflusses (24) aufweist, die mit einer Ventilkontaktfläche (26) in Kontakt treten kann, die auf der Kompressionsfläche (10) ausgebildet ist, wobei das Ventil (2) zweitens eine externe zylindrische Ventilfläche (14) aufweist, die Dichtungsmittel (16) freilegt, die in dichtenden Kontakt mit dem Zylinder (4) treten können, wobei das Ventil (2) drittens eine axiale Ventilfläche auf der Kammerseite (15) aufweist, die der Hydraulikkammer (5) gegenüberliegt,
• mindestens eine Zwischenkammer für den Fluidauslass (29), die - im Inneren der kreisförmigen Fläche zum Absperren des Durchflusses (24) - durch die axiale Ventilfläche auf der Kolbenseite (23) und durch die Kompressionsfläche (10) gebildet ist,
• mindestens eine Öffnung zur Durchfluss-Kalibrierung (27), die das Ventil zum Halten einer Kühl- und Schmierdichtung (2) hauptsächlich in axialer Richtung von einer Seite zur anderen durchquert, wobei die Hydraulikkammer (5) mit der Zwischenkammer für den Fluidauslass (29) über die Öffnung (27) in Verbindung steht, und
• mindestens eine Ventilanschlagverbindung (3), die das Ventil zum Halten einer Kühl- und Schmierdichtung (2) mit dem zylindrischen Körper (6) verbindet, wobei die Anschlagverbindung (3) dem Ventil (2) ermöglicht, sich bis zu dem Punkt dem Körper (6) zu nähern, an dem die kreisförmige Fläche zum Absperren des Durchflusses (24) mit der Ventilkontaktfläche (26) in Kontakt tritt, während die Anschlagverbindung dem Ventil (2) verbietet, sich von dem Körper (6) um mehr als einen gewissen Abstand zu entfernen:
wobei der Kolben (1) **dadurch gekennzeichnet ist, dass** er aufweist:
• mindestens eine Ventilrückstellfeder (30), die dazu neigt, das Ventil zum Halten einer Kühl- und Schmierdichtung (2) von dem zylindrischen Körper (6) zu entfernen.

2. Hydraulischer Kolben nach Anspruch 1, **dadurch gekennzeichnet, dass** die Ventilrückstellfeder (30) ganz oder teilweise im Inneren der Zwischenkammer für den Fluidauslass (29) angeordnet ist.

3. Hydraulischer Kolben nach Anspruch 1, **dadurch gekennzeichnet, dass** die Dichtungsmittel (16) mindestens aus einem Schneidsegment (17) gebildet sind, das in einer Segmentnut (18) angeordnet ist, die in dem Ventil zum Halten einer Kühl- und Schmierdichtung (2) ausgebildet ist oder ganz oder teilweise auf dem Ventil (2) angebracht ist, wobei die Nut (18) auf Ebene der externen zylindrischen Ventilfläche (14) mündet.

4. Hydraulischer Kolben nach Anspruch 1, **dadurch gekennzeichnet, dass** die Dichtungsmittel (16) mindestens aus einer kreisförmigen flexiblen Dichtung (19) gebildet sind, die in einer Segmentnut (18) angeordnet ist, die in dem Ventil zum Halten einer Kühl- und Schmierdichtung (2) ausgebildet ist oder ganz oder teilweise auf dem Ventil (2) angebracht ist, wobei die Nut (18) auf Ebene der externen zylindrischen Ventilfläche (14) mündet.

5. Hydraulischer Kolben nach Anspruch 1, **dadurch gekennzeichnet, dass** der zylindrische Körper (6) eine Entlastungsnut zur Vermeidung von Scherung (20) aufweist.

6. Hydraulischer Kolben nach Anspruch 1, **dadurch gekennzeichnet, dass** sich der Durchmesser des axialen Endes des zylindrischen Körpers (6), das sich auf der Seite der Kompressionsfläche (10) befindet, über eine bestimmte Länge allmählich verringert, um eine Schräge des Hubs (21) zu bilden.

7. Hydraulischer Kolben nach Anspruch 1, **dadurch gekennzeichnet, dass** der Durchmesser des axialen Endes des Zylinders (4), das gegenüberliegend von der Hydraulikkammer (5) angeordnet ist, über eine bestimmte Länge allmählich zunimmt, um eine Aufweitung des Hubs (12) zu bilden.

8. Hydraulischer Kolben nach Anspruch 1, **dadurch gekennzeichnet, dass** die Ventilanschlagverbindung (3) aus einer Anschlagverbindungsachse (13) gebildet ist, die einstückig aus der Kompressionsfläche (10) austritt, um einerseits das Ventil zum Halten einer Kühl- und Schmierdichtung (2) über eine Anschlagverbindungsöffnung (22), die in dem Ventil (2) ausgebildet ist, von einer Seite zur anderen zu durchqueren, und um andererseits über die axiale Ventilfläche auf der Kammerseite (15) hinauszuragen, um der Fläche (15) einen Ventilanschlag (28) freizulegen.

9. Hydraulischer Kolben nach Anspruch 8, **dadurch gekennzeichnet, dass** die Öffnung zur Durchfluss-Kalibrierung (27) aus dem Spiel gebildet ist, das zwischen der Anschlagverbindungsachse (13) und der Anschlagverbindungsöffnung (22) gelassen ist.

10. Hydraulischer Kolben nach Anspruch 1, **dadurch gekennzeichnet, dass** die Ventilanschlagverbindung (3) aus einem Verlängerungsstück der Ventilanschlagverbindung (31) gebildet ist, das einstückig aus der axialen Ventilfläche auf der Kolbenseite (23) austritt, um einerseits über ein Anschlagverbindungs-Bohrloch (32), das in dem Körper (6) ausgebildet ist, in den zylindrischen Körper (6) einzudringen, und um andererseits einen Verlängerungsstück-Anschlag (33) freizulegen, der mit einem Bohrloch-Anschlag (34) zusammenwirkt, den das Anschlagverbindungs-Bohrloch (32) freilegt.

11. Hydraulischer Kolben nach Anspruch 10, **dadurch gekennzeichnet, dass** der Verlängerungsstück-Anschlag (33) aus mindestens einer flexiblen Klaue (42) gebildet ist, die in eine Anschlagnut (43) einrastet, die den Bohrloch-Anschlag (34) bildet.

12. Hydraulischer Kolben nach Anspruch 10, **dadurch gekennzeichnet, dass** die Ventilrückstellfeder (30) ganz oder teilweise in einer Ausnehmung des Verlängerungsstücks (44) angeordnet ist, die in dem Verlängerungsstück der Ventilanschlagverbindung (31) axial ausgebildet ist.

## Claims

1. Hydraulic piston (1) consisting of a cylindrical body (6) housed with a small clearance in a cylinder (4), said piston (1) being capable to translate in said cylinder (4) with which it forms a hydraulic chamber (5) of variable volume, a first end of said piston (1) having a compression surface (10) opening into the hydraulic chamber (5) for receiving the pressure of a fluid (11), while the other end of said piston (3) has a piston support surface (8) for exerting a force on transmission means (9), said piston (1) comprising:
• At least one cooling and lubricating gasket valve (2) positioned on the side of the compression surface (10) and in the extension of the cylindrical body (6) relative to which it can move in longitudinal translation over a short stroke, said valve (2) comprising, firstly, a piston-side valve axial surface (23) which has a circular flow closure surface (24) which can come into contact with a valve contact surface (26) provided on the compression surface (10), said valve (2) having, secondly, an cylindrical external valve surface (14) which exposes sealing means (16) which can sealingly come into contact with the cylinder (4), said valve (2) comprising, thirdly, a chamber-side axial valve surface (15) which faces the hydraulic chamber (5);
• At least one intermediate fluid outlet chamber (29) formed - within the circular flow closure surface (24) - by the piston-side valve axial surface (23) and by the compression surface (10);
• At least one flow calibration opening (27) which passes through the cooling and lubricating gasket valve (2) mainly in the axial direction, the hydraulic chamber (5) communicating with the intermediate fluid outlet chamber (29) via said opening (27), and
• At least one valve abutment-link (3) which connects the cooling and lubricating gasket valve (2) to the cylindrical body (6), said abutment-link (3) allowing said valve (2) to come closer to said body (6) to the point that the circular flow closure surface (24) contacts with the valve contact surface (26), while said abutment-link (3) prevents said valve (2) from moving away from said body (6) more than a certain distance;
Said piston (1) being **characterized in that** it comprises:
• At least one valve return spring (30) which tends to move the cooling and lubricating gasket valve (2) away from the cylindrical body (6).

2. Hydraulic piston according to claim 1, **characterized in that** the valve return spring (30) is wholly or partly housed within the intermediate fluid outlet chamber (29).

3. Hydraulic piston according to claim 1, **characterized in that** the sealing means (16) consist of at least one cut segment (17) housed in a segment groove (18) formed in the cooling and lubricating gasket valve (2) or attached in whole or in part to said valve (2), said groove (18) opening out at the external cylindrical surface of the valve (14).

4. Hydraulic piston according to claim 1, **characterized in that** the sealing means (16) consist of at least one flexible circular seal (19) housed in a segment groove (18) provided in the cooling and lubricating gasket valve (2) or attached in whole or in part to said valve (2), said groove (18) opening out at the external cylindrical surface of the valve (14).

5. Hydraulic piston according to claim 1, **characterized in that** the cylindrical body (6) has an anti-shearing clearance groove (20).

6. Hydraulic piston according to claim 1, **characterized in that** the diameter of the axial end of the cylindrical body (6) located on the side of the compression surface (10) gradually decreases over a certain length to form a lift relief (21).

7. Hydraulic piston according to claim 1, **characterized in that** the diameter of the axial end of the cylinder (4) opposite the hydraulic chamber (5) gradually increases over a certain length to form a lift development (12).

8. Hydraulic piston according to claim 1, **characterized in that** the valve abutment-link (3) consists of an abutment-link pin (13) which emerges integrally from the compression surface (10) in order, on the one hand, to pass through the cooling and lubricating gasket valve (2) via a abutment-link opening (22) formed in said valve (2) and, on the other hand, to project from the chamber-side axial valve surface (15) for exposing to said surface (15) a valve stopper (28).

9. Hydraulic piston according to claim 8, **characterized in that** the flow calibration opening (27) consists of the clearance left between the abutment-link pin (13) and the abutment-link opening (22).

10. Hydraulic piston according to claim 1, **characterized in that** the valve abutment-link (3) consists of an abutment-link valve extender (31) which emerges integrally from the piston-side valve axial surface (23) so as, on the one hand, to penetrate into the cylindrical body (6) via an abutment-link well (32) formed in said body (6) and, on the other hand, to expose an extender stopper (33) which cooperates with a stop well (34) exposed by the abutment-link well (32).

11. Hydraulic piston according to claim 10, **characterized in that** the extender stopper (33) consists of at least one flexible claw (42) which snaps into a stop groove (43) which forms the stop well (34).

12. Hydraulic piston according to claim 10, **characterized in that** the valve return spring (30) is wholly or partially housed in an extender recess (44) arranged axially in the abutment-link valve extender (31).
